# EUROPEAN PATENT APPLICATION

(11) **EP 2 980 531 A1**
(43) Date of publication of application: **03.02.2016**
(21) Application number: 14773876.9
(22) Date of filing: 20.02.2014
(51) Int. Cl.: G01C 21/28, G01S 19/34, G01S 19/40, G01S 19/48

(54) **POSITIONING DEVICE, METHOD FOR CONTROLLING SAME, AND PROGRAM**

(30) Priority: 27.03.2013 JP 2013066248
(71) Applicant: NEC CORPORATION, Tokyo 108-8001 (JP)
(72) Inventor: SHIMIZU, Kazuto, Kawasaki-shi Kanagawa 211-8666 (JP)
(74) Representative: Vossius & Partner Patentanwälte Rechtsanwälte mbB
(86) International application number: PCT/JP2014/053985
(87) International publication number: WO 2014/156385

(57) **Abstract**

This positioning device includes: a first positioning means that measures the position of the positioning device at prescribed time intervals; a second positioning means that measures the position of the positioning device with lower accuracy than the first positioning means and at time intervals that are shorter than those used by the first positioning means; a correction means that corrects the measurement results of the second positioning means on the basis of the position measured by the first positioning means at a prescribed point in time and the position at the prescribed point in time obtained from the measurement results of the second positioning means; and a generation means that, on the basis of the measurement results of the first positioning means and the measurement results of the second positioning means as corrected by the correction means, generates path information indicating the path of movement of the positioning device.

## Description

### Technical Field

The present invention relates to a positioning device, a method of controlling the positioning device, and a program.

### Background Art

In recent years, among portable devices such as portable telephones and smartphones are included some devices that mount positioning devices that measure position. By means of these portable devices, the path of movement of the portable device can be displayed by plotting the positions measured by the positioning device on a map and then joining the positions in time sequence order. Such positioning devices are also mounted in, for example, car navigation devices.

A technology for realizing lower power consumption in positioning devices such as described above is disclosed in Patent Document 1 (Japanese Unexamined Patent Application Publication No. 2008-170278) and Patent Document 2 (Japanese Unexamined Patent Application Publication No. H08-33434).

In the technology disclosed in Patent Document 1 and Patent Document 2, a technique is disclosed in which a positioning device is provided with a positioning means that measures position with high accuracy such as measurement based on a GPS (Global Positioning System) signal and a positioning means that measures position with low accuracy such as measurement based on autonomous navigation that uses an acceleration sensor or measurement based on information from a wireless network, the gaps between positions measured at prescribed time intervals by the high-accuracy positioning means being compensated by positions measured by the low-accuracy positioning means.

Typically, the power consumption of a high-accuracy positioning means is greater than the power consumption of a low-accuracy positioning means. In the above-described technology, an extremely detailed path with a great number of plotted points can be found while reducing an increase in power consumption by lengthening the intervals at which measurement is carried out by the high-accuracy positioning means and compensating between the positions measured by the high-accuracy positioning means at prescribed time intervals by positions measured by the low-accuracy positioning means.

### Literature of the Prior Art

### Patent Documents

Patent Document 1: Japanese Unexamined Patent Application Publication No. 2008-170278
Patent Document 2: Japanese Unexamined Patent Application Publication No. H8-33434

### Summary of the Invention

### Problem to be Solved by the Invention

When a path is found by combining a plurality of positioning means having different accuracies as in the technology disclosed by Patent Document 1 and Patent Document 2, a path sometimes cannot be found with high precision due to the error of measurement in the low-accuracy positioning means. In particular, whenever a significant discrepancy occurs between positions measured by the high-accuracy positioning means and positions measured by the low-accuracy positioning means due to the error of measurement of the low-accuracy positioning means, the measured path diverges greatly from the actual path at portions at which the positions measured by the high-accuracy positioning means are joined with positions measured by the low-accuracy positioning means.

It is an object of the present invention to provide a positioning device, a method of controlling the positioning device, and a program by which a path can be found with high accuracy while reducing an increase in power consumption.

### Means for Solving the Problem

The positioning device of the present invention for achieving the above-described object includes:
first positioning means that performs measurement of the position of the positioning device at prescribed time intervals;
second positioning means that performs measurement of the position of the positioning device with lower accuracy than the first positioning means and at shorter time intervals than the first positioning means;
correction means that corrects the measurement results of the second positioning means based on the position measured at a prescribed time by the first positioning means and the position at the prescribed time obtained from the measurement result realized by the second positioning means; and
generation means that, based on the measurement result realized by the first positioning means and the measurement result realized by the second positioning means as corrected by the correction means, generates path information that shows the path of movement of the positioning device.

The control method of the positioning device of the present invention for realizing the above-described object includes steps of:
performing a first measurement of carrying out, at prescribed time intervals, the measurement of the position of the positioning device;
performing a second measurement of carrying out, at time intervals that are shorter than those of the first measurement, the measurement of the position of the positioning device with lower accuracy than the first measurement;
performing correction of the measurement results realized by the second measurement based on the position that was measured at a prescribed time by the first measurement and the position at the prescribed time that was obtained from the measurement result realized in the second measurement;
and generating path information that shows the path of movement of the positioning device based on the measurement result realized by the first measurement, and the measurement result realized by the second measurement as corrected by the correction.

The program of the present invention for achieving the above-described object causes a computer in a positioning device to execute:
a first measurement process of carrying out, at prescribed time intervals, measurement of the position of the positioning device;
a second measurement process of carrying out, at time intervals that are shorter than those of the first measurement process, measurement of the position of the positioning device with
lower accuracy than in the first measurement process;
a correction process of carrying out correction of the measurement result realized by the second measurement process based on the position that was measured at a prescribed time by means of the first measurement process and the position at the prescribed time that was obtained from the measurement result realized in the second measurement process; and
a generation process of generating path information that shows the path of movement of the positioning device in the time interval in which the plurality of measurements were carried out based the result of measurement realized by the first measurement process and the result of measurement realized in the second measurement process as corrected by the correction process.

### Effect of the Invention

According to the present invention, a path can be found with high accuracy while redusing an increase of power consumption.

### Brief Description of the Drawings

FIG. 1 is a block diagram showing the configuration of the positioning device of an exemplary embodiment of the present invention.
FIG. 2 is a flow chart showing the operation of the positioning device shown in FIG. 1.
FIG. 3 is a view for describing correction carried out by the correction unit shown in FIG. 1.
FIG. 4 is a view for describing correction carried out by the correction unit shown in FIG. 1.
FIG. 5 is a view for describing correction carried out by the correction unit shown in FIG. 1.
FIG. 6 shows an example of the path that is generated by the path display unit shown in FIG. 1.
FIG. 7 is a block diagram showing another configuration of the positioning device of an exemplary embodiment of the present invention.
FIG. 8 is a block diagram showing an example of the hardware configuration of the positioning device of an exemplary embodiment of the present invention.

### Best Mode for Carrying Out the Invention

Exemplary embodiments of the present invention are next described with reference to the accompanying drawings.

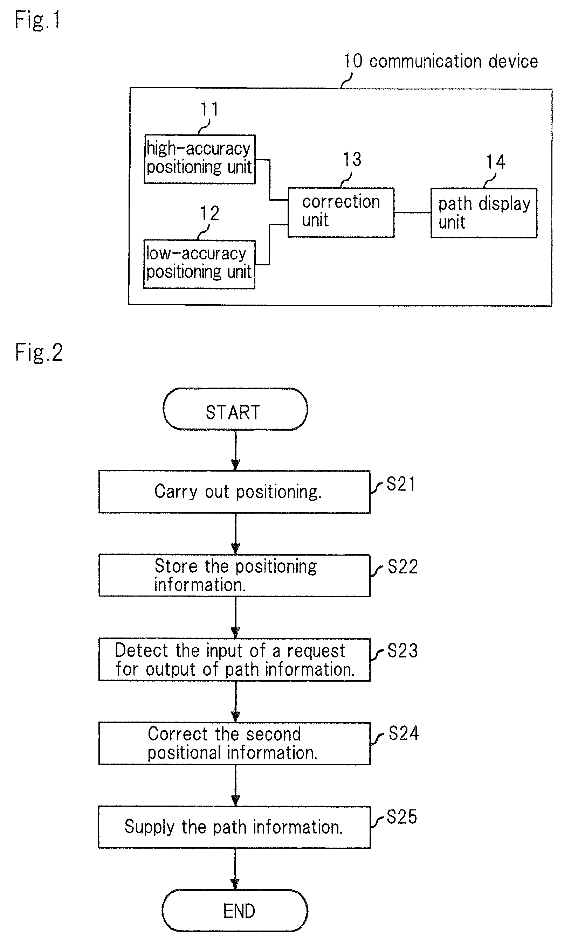

FIG. 1 is a block diagram showing the configuration of positioning device 10 of an exemplary embodiment of the present invention. Positioning device 10 is mounted in, for example, a car navigation device, a portable telephone, a smartphone, a tablet or notebook personal computer, a portable game device, or a PDA (Personal Data Assistant).

Positioning device 10 shown in FIG. 1 includes high-accuracy positioning unit 11, low-accuracy positioning unit 12, correction unit 13, and path display unit 14. High-accuracy positioning unit 11 is an example of the first positioning means, low-accuracy positioning unit 12 is an example of the second positioning means, correction unit 13 is an example of the correction means, and path display unit 14 is an example of the generation means (generation unit).

High-accuracy positioning unit 11 carries out measurement of the position of positioning device 10, generates first positional information that indicates the measurement result, and supplies the result to correction unit 13. Here, high-accuracy positioning unit 11 receives, for example, a GPS signal from a GPS satellite and carries out measurement based on the GPS signal that was received.

Low-accuracy positioning unit 12 carries out measurement of the position of positioning device 10, generates second positional information that indicates the measurement result, and supplies the result to correction unit 13. Here, low-accuracy positioning unit 12 carries out, for example, measurement that employs information from a wireless network or measurement based on autonomous navigation that uses an acceleration sensor.

The measurement carried out by low-accuracy positioning unit 12 based on information from a wireless network or measurement based on autonomous navigation that uses an acceleration sensor typically has lower accuracy but entails less power consumption than the measurement based on GPS signals that is carried out by high-accuracy positioning unit 11.

Correction unit 13 stores each item of the first positional information generated by the measurement realized by high-accuracy positioning unit 11 and the second positional information generated by the measurement realized by low-accuracy positioning unit 12 in association with time information that indicates the time at which measurement was carried out. In addition, correction unit 13 corrects the second positional information based on the position that high-accuracy positioning unit 11 measured at a certain time and the position at the same time that was obtained from the measurement result of low-accuracy positioning unit 12.

Path display unit 14 generates and supplies, as output, path information that indicates the path of movement of positioning device 10 based on the first positional information and the second positional information that were corrected and that are stored in correction unit 13 and displays the path information on, for example, a display unit of the device in which positioning device 10 is mounted.

The operation of positioning device 10 of the present exemplary embodiment is next described.

FIG. 2 is a flow chart showing the operation of positioning device 10.

Each of high-accuracy positioning unit 11 and low-accuracy positioning unit 12 carries out measurement at prescribed time intervals and supplies positional information to correction unit 13. The second positional information is used for compensating the intervals between positions that were measured at the prescribed time intervals by high-accuracy positioning unit 11. As a result, the time intervals at which low-accuracy positioning unit 12 carries out measurements are therefore normally shorter than the time intervals at which high-accuracy positioning unit 11 carries out measurements.

Correction unit 13 stores the positional information that is generated by the measurements carried out by high-accuracy positioning unit 11 and low-accuracy positioning unit 12 in association with the times at which the measurements were carried out (Step S22).

Correction unit 13 next, upon detecting the input of a path information output request (Step S23), carries out correction of the second positional information that is stored (Step S24). Here, the interval for which the path is to be found (hereinbelow referred to as the designated interval) is designated in the path information output request.

Correction unit 13 carries out correction of the second positional information that was generated according to the measurements carried out in the designated interval. Details of the correction of the second positional information are described hereinbelow.

After correction of the second positional information, path display unit 14 generates path information based on the first positional information and the second positional information that were corrected and that were generated according to measurements carried out in the designated interval and supplies the result as output (Step S25).

The correction carried out by correction unit 13 is next described.

Correction unit 13 first extracts the first positional information and second positional information that were generated according to the measurements carried out in the designated interval and identifies the positions that are indicated in each item of positional information that was extracted.

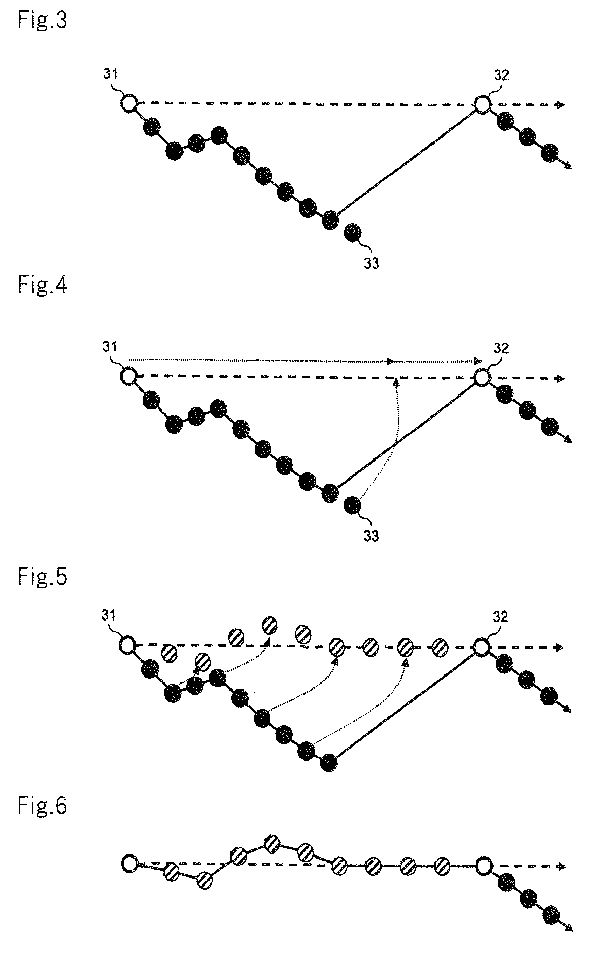

FIG. 3 shows an example of the changes through a time sequence of the positions indicated by the first positional information and second positional information. In the following explanation, the white circles are assumed to indicate the positions indicated by the first positional information, and the black circles are assumed to indicate the positions indicated by the second positional information. The broken-line arrow is assumed to indicate the actual path of movement of positioning device 10, and the solid-line arrow is assumed to indicate the path that is found by joining the positions indicated by the positional information.

As shown in FIG. 3, positioning device 10 is assumed to move from left to right.

Correction unit 13 determines that, of the times indicated by time information that is placed in association with each of two items of first positional information, the interval from the earlier time (the first time) until the later time (the second time) is the correction space. In addition, correction unit 13 determines the position indicated by the first positional information that was generated according to the measurement carried out by high-accuracy positioning unit 11 at the first time to be correction space start point 31 (first position) and determines the position indicated by the first positional information generated according to the measurement carried out by high-accuracy positioning unit 11 at the second time to be correction space end point 32 (second position).

Correction unit 13 next determines the position obtained from the measurement result of low-accuracy positioning unit 12 at the second time to be correction end point 33 (third position).

When there is no second positional information that was generated according to measurement at the second time, correction unit 13 uses a plurality of items of second positional information that were generated according to measurements of low-accuracy positioning unit 12 that preceded the second time to infer correction end point 33.

For example, correction unit 13 infers correction end point 33 to be the position that: is on the extended line of the position indicated by second positional information that was generated according to measurement takes at two timings before the second time and the position indicated by second positional information that was obtained according to measurement takes at one timing before the second time, and that is obtained by extending, from the position that was measured at the timing that was one timing before the second time, the distance between the position measured at the timing that is two timings before the second time to the position measured at the timing that is one timing before the second time.

Correction unit 13 next both rotates correction end point 33 with correction space start point 31 as the center and expands or shrinks the distance between correction space start point 31 and correction end point 33 such that correction end point 33 and correction space end point 32 coincide as shown in FIG. 4. Correction unit 13 then determines the angle of rotation of correction end point 33 with correction space start point 31 as the center such that correction end point 33 and correction space end point 32 coincide. Correction unit 13 further determines the magnification (hereinbelow referred to as the enlargement/reduction ratio) of enlarging or reducing the distance between correction space start point 31 and correction end point 33 such that correction end point 33 and correction space end point 32 coincide.

Correction unit 13 next uses the angle of rotation and the enlargement/reduction ratio that were determined to move the positions indicated by each of the items of second positional information other than the second positional information that indicates correction end point 33 with correction space start point 31 as the center, as shown in FIG. 5. In the following explanation, the positions indicated by the second positional information that was corrected are indicated by circles with hatching lines that rise toward the right.

Upon completion of the correction of the second positional information, path display unit 14 finds the path by joining the positions indicated by the first positional information and the second positional information after correction in the order of time sequence, as shown in FIG. 6.

A comparison of the path that is found from the first positional information and the second positional information prior to correction (FIG. 3) with the path that is found from the first positional information and the second positional information after correction (FIG. 6) shows that the path that is found from the first positional information and the second positional information after correction has less error with respect to the actual path of movement of positioning device 10 and has higher accuracy. The error with respect to the actual path of movement is particularly small and the accuracy particularly high in portions at which positions indicated by the first positional information are joined with positions indicated by the second positional information in the path that is found from the first positional information and the second positional information after correction.

Accordingly, positioning device 10 of the present exemplary embodiment includes: high-accuracy positioning unit 11 and low-accuracy positioning unit 12, corrects the second positional information that was generated according to measurements carried out by low-accuracy positioning unit 12 in the correction space based on the measurement results of high-accuracy positioning unit 11 and low-accuracy positioning unit 12 at the same time that is contained in the correction space, generates path information based on first positional information that was generated according to measurements carried out by high-accuracy positioning unit 11 in the correction space and second positional information after correction, and supplies the result as output.

Increase of power consumption can be reduced by compensating the spaces between positions that were measured at prescribed time intervals by high-accuracy positioning unit 11 that has high power consumption with the positions that were measured by low-accuracy positioning unit 12 that has low power consumption.

In addition, by correcting the second positional information so as to decrease the error of the same-time measurement results of high-accuracy positioning unit 11 and low-accuracy positioning unit 12 and then finding the path based on second positional information that follows correction, the path can be obtained with high accuracy and with little error with respect to the actual path of movement, particularly in the portions at which the positions indicated by the first positional information are joined to positions indicated by the second positional information.

Correction unit 13 may also not perform correction when the distance between correction end point 33 and correction space end point 32 is greater than a predetermined threshold value.

When the distance between correction end point 33 and correction space end point 32 is great, there is a high possibility that a large error will be contained in the measurement results of low-accuracy positioning unit 12. In such cases, the accuracy of the path that is obtained based on the second positional information that after correction may be particularly poor. As a result, correction is not carried out when the distance between correction end point 33 and correction space end point 32 is greater than a predetermined threshold value.

Correction unit 13 may also not perform correction when the angle formed by the line that joins correction space start point 31 and correction space end point 32 and the line that joins correction space start point 31 and correction end point 33 is greater than a predetermined threshold value.

When the angle formed by the line that joins correction space start point 31 and correction space end point 32 and the line that joins correction space start point 31 and correction end point 33 is large, there is a high possibility that a large error will be contained in the measurement results of low-accuracy positioning unit 12. In such cases, the accuracy of the path obtained based on the second positional information after correction may be particularly poor. As a result, correction unit 13 does not perform correction when the angle formed by the line that joins correction space start point 31 and correction space end point 32 and the line that joins correction space start point 31 and correction end point 33 is greater than a predetermined threshold value.

When the total amount of movement at the positions indicated by the second positional information, before and after the second positional information is corrected, is greater than a predetermined threshold value, correction unit 13 need not perform correction.

When the total of the amount of movement of the positions indicated in the second positional information, before and after the second positional information is corrected, is greater than a prescribed threshold value, there is a high possibility that a large amount of error will be contained in the measurement results of low-accuracy positioning unit 12. In such cases, the accuracy of the path that is obtained based on the second positional information after correction may be even poorer. As a result, correction unit 13 does not perform correction when the total amount of movement of the positions indicated by the second positional information, before and after the second positional information is corrected, is greater than a prescribed threshold value.

In addition, correction unit 13 may be set so that it does not carry out correction when the distance between correction space start point 31 and correction space end point 32 is less than a prescribed threshold value.

When the distance between correction space start point 31 and the correction space end point 32 is small, there is a possibility that the second positional information in the correction space will be overcorrected even when the divergence between correction end point 33 and correction space end point 32 is small. In such cases, the accuracy of the path that is obtained based on the second positional information after correction may actually be worse. As a result, correction unit 13 does not carry out correction when the distance between correction space start point 31 and correction space end point 32 is less than a prescribed threshold value.

When valid second positional information cannot be obtained for more than a prescribed time interval in the correction space (for example, when the second positional information cannot be obtained or when second positional information is not valid), correction unit 13 need not carry out correction.

When valid second positional information cannot be obtained for more than a prescribed time interval, there is a possibility that some type of problem has occurred in part or all of the measurement results of low-accuracy positioning unit 12. For example, when low-accuracy positioning unit 12 performs measurement based on autonomous navigation that is dedicated to walking, the second positional information that is obtained by low-accuracy positioning unit 12 will not be valid if a vehicle is boarded in the correction space and low-accuracy positioning unit 12 carries out measurement in the vehicle. In such cases, the accuracy of the path that is obtained based on second positional information after correction may actually be worse. As a result, correction unit 13 does not carry out correction when valid second positional information cannot be obtained for a prescribed time interval or longer.

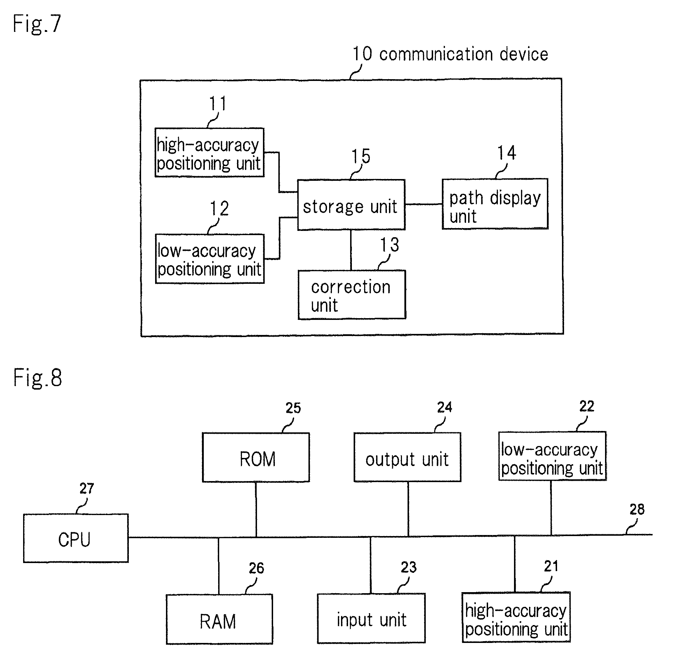

In the present exemplary embodiment, an example was described in which correction unit 13 stored positional information, but the present invention is not limited to this form. Storage unit 15 that stores positional information may also be provided in positioning device 10, as shown in FIG. 7. In this case, correction unit 13 extracts from the positional information that is stored in storage unit 15 first positional information and second positional information that were generated by carrying out measurements in a designated interval, carries out the above-described correction, and causes storage of the second positional information after correction in storage unit 15.

Path display unit 14 extracts first positional information that was generated by carrying out measurements in an interval that is designated in a path information output request and second positional information that has been corrected by correction unit 13 and uses the extracted positional information to supply path information.

FIG. 8 is a block diagram showing an example of the hardware configuration of positioning device 10.

Positioning device 10 includes: first positioning unit 21 (first positioning means), second positioning unit 22 (second positioning means), input unit 23, output unit 24, ROM (Read Only Memory) 25, RAM (Random Access Memory) 26, and CPU (Central Processing Unit) 27. Each of the parts described above are interconnected by means of bus 28.

High-accuracy positioning unit 21 carries out measurement of the position of positioning device 10. As an example, high-accuracy positioning unit 21 here includes an antenna for receiving a GPS signal and carries out measurement based on the received GPS signal.

Low-accuracy positioning unit 22 carries out measurement of the position of positioning device 10. As an example, low-accuracy positioning unit 22 includes an acceleration sensor and carries out measurement based on autonomous navigation that uses the acceleration that is detected by the acceleration sensor. In addition, low-accuracy positioning unit 22 includes an antenna for receiving information from a wireless network and carries out measurement based on the received information.

Input unit 23 is made up of an input device such as a touch sensor, a keyboard, a mouse, or a joystick. The user is able to manipulate these input devices to apply input such as a path information output request.

Output unit 24 is made up of an output device such as a display. For example, the path of movement of positioning device 10 is displayed on output unit 24.

ROM 25 is memory that stores basic programs or parameters that are necessary for causing positioning device 10 to function.

RAM 26 is memory to which data can be written or from which data can be deleted and provides a working memory when CPU 27 is carrying out various processes.

CPU 27 is a central processing unit that executes various processes in accordance with programs that are stored in, for example, ROM 25.

For example, CPU 27 stores the results of carrying out positioning by high-accuracy positioning unit 21 and low-accuracy positioning unit 22 in RAM 26 together with time information that indicates the times at which positioning was carried out.

In addition, when a path information output request is received, CPU 27 carries out correction of the measurement results of low-accuracy positioning unit 22 in the designated interval that was designated in the path information output request that was described in FIGs. 3 to 5. CPU 27 further generates path information based on the measurement results of high-accuracy positioning unit 21 in the designated interval that was designated in the path information output request and the measurement results of low-accuracy positioning unit 22 after correction and causes output of the path that is indicated in the path information to output unit 24.

The method carried out in a positioning device according to the present invention may be applied to a program that is executed by a computer. This program can also be stored on a recording medium and can also be provided to the outside by way of a network.

Although the invention of the present application has been described with reference to exemplary embodiments, the present invention is not limited to the above-described exemplary embodiments. The configuration and details of the invention of the present application are open to various modifications within the scope of the invention of the present application that will be clear to one of ordinary skill in the art.

This application claims the benefits of priority based on Japanese Patent Application No. 2013-66248 for which application was submitted on March 27, 2013 and incorporates by citation all of the disclosures of that application.

## Claims

1. A positioning device comprising:
first positioning means that performs measurement of the position of said positioning device at prescribed time intervals;
second positioning means that performs measurement of the position of said positioning device with lower accuracy than said first positioning means and at shorter time intervals than said first positioning means;
correction means that corrects the measurement results of said second positioning means based on the position measured at a prescribed time by said first positioning means and the position at said prescribed time obtained from the measurement result realized by said second positioning means; and
generation means that, based on the measurement result realized by said first positioning means and the measurement result realized by said second positioning means after correction by said correction means, generates path information that shows the path of movement of said positioning device.

2. The positioning device as set forth in claim 1, wherein said correction means, based on a first position that is a position measured by said first positioning means at a first time, a second position that is a position measured by said first positioning means at a second time that follows said first time, and a third position that is a position at said second time that is obtained from the measurement result realized by said second positioning means, carries out correction of measurement results realized by said second positioning means from said first time until said second time.

3. The positioning device as set forth in claim 2, wherein said correction means determines the angle of rotation at which said third position is rotated with said first position as center and the magnification by which the distance between said first position and said third position is enlarged or reduced such that said second position and said third position coincide; and based on the angle of rotation and magnification that were determined, carries out correction of the measurement results of said second positioning means.

4. The positioning device as set forth in claim 3, wherein said correction means does not carry out said correction when the distance between said second position and said third position is greater than a predetermined threshold value.

5. The positioning device as set forth in claim 3 or claim 4, wherein said correction means does not carry out said correction when the angle formed by the straight line that joins said first position and said second position and the straight line that joins said first position and said third position is greater than a predetermined threshold value.

6. The positioning device as set forth in any one of claims 3 to 5, wherein said correction means does not carry out said correction when the total amount of movement of positions that are measured by means of said second positioning means realized by correction of the measurement results of said second measurement means is greater than a predetermined threshold value.

7. The positioning device as set forth in any one of claims 3 to 6, wherein said correction means does not carry out said correction when the distance between said first position and said second position is less than a predetermined threshold value.

8. The positioning device as set forth in any one of claims 3 to 7, wherein said correction means does not carry out said correction when, in said predetermined interval, an interval in which there is no valid measurement result realized by said second positioning means is longer than a predetermined threshold value.

9. A control method of a positioning device comprising steps of:
performing a first measurement of carrying out, at predetermined time intervals, measurement of the position of said positioning device;
performing a second measurement of carrying out, at time intervals that are shorter than those of said first measurement, measurement of the position of said positioning device at lower accuracy than said first measurement;
performing correction of measurement results realized by said second measurement based on the position that was measured at a predetermined time by said first measurement and the position at said predetermined time that was obtained from the measurement result realized in said second measurement; and
generating path information that shows the path of movement of said positioning device based on the measurement results realized by the first measurement and the measurement results realized by said second measurement as corrected by said correction.

10. A program that causes a computer in a positioning device to execute:
a first measurement process of carrying out, at prescribed time intervals, measurements of the position of said positioning device;
a second measurement process of carrying out, at time intervals that are shorter than those of said first measurement process, measurements of the position of said positioning device at lower accuracy than in said first measurement process;
a correction process of carrying out correction of the measurement results realized by said second measurement process based on the position that was measured at a predetermined time by means of said first measurement process and the position at said predetermined time that was obtained from the measurement result realized in said second measurement process; and
a generation process of generating path information that shows the path of movement of said positioning device based on the measurement result realized in said first measurement process and the measurement result realized in said second measurement process as corrected by said correction process.
